# EUROPEAN PATENT APPLICATION

(11) **EP 3 222 885 A1**
(43) Date of publication of application: **27.09.2017**
(21) Application number: 15860912.3
(22) Date of filing: 19.11.2015
(51) Int. Cl.: F16H 57/027, B60K 7/00

(54) **DRIVE DEVICE AND VENTILATION MEMBER**

(30) Priority: 19.11.2014 JP 2014234897
(71) Applicant: Nitto Denko Corporation, Ibaraki-shi, Osaka 567-8680 (JP)
(72) Inventor: FURUUCHI, Koji, Ibaraki-shi Osaka 567-8680 (JP); OMURA, Kazuhiro, Ibaraki-shi Osaka 567-8680 (JP)
(74) Representative: Hoffmann Eitle
(86) International application number: PCT/JP2015/082567
(87) International publication number: WO 2016/080493

(57) **Abstract**

Provided is a technology whereby leakage of oil from inside a case to outside the case can be suppressed, as a result of including: a motor unit 100; a deceleration unit 200 that, as a result of having oil interposed therein, operates smoothly and decelerates the rotary speed of the motor unit 100; a case 400 that contains the deceleration unit 200; and a ventilation member 500 attached to the case 400 and having a ventilation membrane that captures oil moving from inside the case 400 towards outside the case 400 and also has multiple pores formed therein that permit a gas to flow between the inside and the outside.

## Description

### Technical Field

The present invention relates to a drive device and a ventilation member.

### Background Art

In recent years, techniques for maintaining an internal pressure of an in-wheel motor mounted to a vehicle constant have been suggested.

For example, an in-wheel motor driving device described in Patent Document 1 is configured as follows. In other words, the in-wheel motor driving device is provided with: a motor unit for rotating and driving a motor side rotating member; a speed reduction unit for reducing speed of the rotation of the motor side rotating member to transmit the rotation to a wheel side rotating member; a casing for holding the motor unit and the speed reduction unit; a wheel hub fixed and connected to the wheel side rotating member; a second casing disposed at a position adjacent to the motor unit in an axial direction to be communicated with the casing; and an internal pressure adjusting unit for adjusting internal pressure of the casing on a wall surface directed in the radial direction of the second casing.

### Citation List

### Patent Literature

Patent Document 1: Japanese Patent Application Laid-Open Publication No. 2009-214729

### Summary of Invention

### Technical Problem

In a drive device, such as an in-wheel motor including a deceleration unit, oil is enclosed inside a case that contains the deceleration unit. Therefore, during operation of the drive device, there is a possibility that a pressure inside the case containing the deceleration unit is increased with heat generation due to operation of the deceleration unit or the like, and the oil leaks from the inside of the case to the outside of the case.

An object of the present invention is to provide a drive device and a ventilation member capable of suppressing leakage of oil from inside to outside of a case.

### Solution to Problem

Under such an object, the present invention is a drive device (10) including a motor (100); a deceleration unit (200) that smoothly operates due to interposition of oil and decelerates rotary speed of the motor (100); a case (400) that contains the deceleration unit (200); and a ventilation body (510) that is attached to the case (400), captures the oil moving from inside the case (400) toward outside of the case (400) and includes multiple pores (511) formed therein for permitting flow of a gas between the inside and the outside.

Here, the ventilation body (510) may be a porous body in which the multiple pores (511) are continuously disposed three-dimensionally.

Moreover, the ventilation body (510) may discharge the captured oil to the inside of the case (400) by self weight of the oil through a communicating hole in which the multiple pores (511) are communicated.

Moreover, oil repellent treatment is applied to at least a portion on the outside of the ventilation body (510).

From another standpoint, the present invention is a drive device (10) including: a drive mechanism (200) that smoothly operates due to interposition of oil and generates heat by operating; a case (400) that contains the drive mechanism (200); and a ventilation body (510) that is attached to the case (400), captures the oil moving from inside the case (400) toward outside of the case (400) and includes multiple pores (511) formed therein for permitting flow of a gas between the inside and the outside.

Moreover, from another standpoint, the present invention is a ventilation member (500) including: a ventilation body (510) that captures oil moving from inside a case (400) toward outside of the case (400) and includes multiple pores (511) formed therein for permitting flow of a gas between the inside and the outside, the case (400) containing a drive mechanism (200) that smoothly operates due to interposition of the oil and generates heat by operating; and an attachment part (520) that attaches the ventilation body (510) to the case (400).

Here, the ventilation body (510) may be a porous body in which the multiple pores (511) are continuously disposed three-dimensionally.

Moreover, the ventilation body (510) may discharge the captured oil to the inside of the case (400) by self weight of the oil through a communicating hole in which the multiple pores (511) are communicated.

Moreover, oil repellent treatment is applied to at least a portion on the outside of the ventilation body (510).

### Advantageous Effects of Invention

According to the present invention, it is possible to suppress leakage of oil from inside to outside of a case.

### Brief Description of Drawings

FIG. 1 is a diagram showing a general configuration of a wheel drive device related to an exemplary embodiment;
FIG. 2A is an enlarged view of a part of a deceleration unit, and FIG. 2B is a cross-sectional view of a IIb-IIb part in FIG. 2A;
FIG. 3 is a diagram in which a lubrication device is viewed in a shaft center direction;
FIG. 4 is a cross-sectional view of a ventilation member;
FIG. 5 is an enlarged view of a V part in FIG. 4; and
FIG. 6 is a diagram showing a modified example of another attachment position of the ventilation member.

### Description of Embodiments

Hereinafter, an exemplary embodiment according to the present invention will be described in detail with reference to attached drawings.

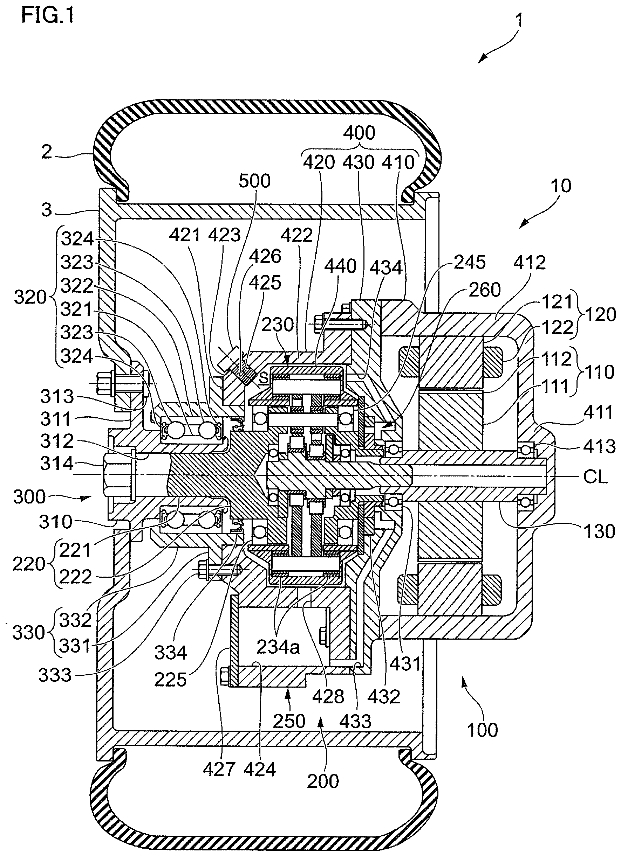

FIG. 1 is a diagram showing a general configuration of a wheel drive device 1 related to the exemplary embodiment.

The wheel drive device 1 is a device adopting a so-called in-wheel motor system that is applied to, for example, an electric vehicle, and has an electric motor for each wheel.

The wheel drive device 1 includes a tire 2, a wheel 3 to which the tire 2 is attached, and an in-wheel motor drive device 10 disposed on an inner circumferential side of the wheel 3 (hereinafter, in some cases, simply referred to as "drive device 10").

### <Configuration of drive device 10>

The drive device 10 will be described in detail as follows.

The drive device 10 includes a motor unit 100 that generates a drive force, a deceleration unit 200 that decelerates rotary speed of the motor unit 100 and outputs thereof, and a transmission unit 300 that transmits the output from the deceleration unit 200 to the wheel 3. Moreover, the drive device 10 includes a case 400 that contains the motor unit 100 and the deceleration unit 200, and a ventilation member 500 that adjusts a pressure inside the case 400.

### <<Configuration of case 400>>

The case 400 includes a motor-unit-side case 410 disposed on the motor unit 100 side, a deceleration-unit-side case 420 disposed on the deceleration unit 200 side, and an intermediate case 430 disposed between the motor-unit-side case 410 and the deceleration-unit-side case 420. Moreover, the case 400 includes an outside-pin support part 440 that rotatably supports outside pins 234, which will be described later, of the deceleration unit 200.

### [Configuration of motor-unit-side case 410]

The motor-unit-side case 410 is a member having a bottomed cylindrical shape, and includes a disk-shaped part 411 having substantially a disk-like shape and a cylinder-shaped part 412 having substantially a cylindrical shape that protrudes from an end portion on an outer diameter side in the disk-shaped part 411 toward a direction of a shaft center CL.

Into a center portion in the disk-shaped part 411, a bearing 413 is fitted.

To an inner circumferential surface of the cylinder-shaped part 412, a stator 120, which will be described later, is attached. As a method of attaching the stator 120 to the cylinder-shaped part 412, methods such as a method of fitting by close fit, a method of joining by use of a bonding agent and a method of clamping by a clamping member, such as a bolt, can be provided as examples.

### [Configuration of deceleration-unit-side case 420]

The deceleration-unit-side case 420 includes: a disk-shaped part 421 having substantially a disk-like shape and an opening in a center portion around the shaft center CL; a cylinder-shaped part 422 having substantially a cylindrical shape; a connection part 423 that connects an end portion on an outer diameter side in the disk-shaped part 421 and an end portion in the direction of the shaft center CL in the cylinder-shaped part 422; and an oil reservoir chamber 424 provided below the cylinder-shaped part 422 and the connection part 423.

Into the opening of the center portion in the disk-shaped part 421, the transmission unit 300 is fitted.

The connection part 423 is a cylinder-like portion formed such that the inner diameter and the outer diameter thereof become gradually larger from the disk-shaped part 421 to the cylinder-shaped part 422. Then, as viewed in the cross-sectional view in FIG. 1, the connection part 423 is inclined at substantially 45 degrees to the shaft center CL. In the connection part 423, a through hole 425 that allows the inside and the outside of the deceleration-unit-side case 420 to be communicated is formed and a female thread 426 into which the ventilation member 500 is tightened is formed on an inner circumferential surface of the through hole 425.

The oil reservoir chamber 424 is, as viewed in the cross-sectional view in FIG. 1, a portion formed by opening of the disk-shaped part 421 to form substantially a U shape together with a part in a circumferential direction in the cylinder-shaped part 422. The oil reservoir chamber 424 is closed by a lid 427.

At a lower end portion of the cylinder-shaped part 422, an oil discharge hole 428 that allows the inside of the cylinder-shaped part 422 and the oil reservoir chamber 424 positioned outside of the cylinder-shaped part 422 to be communicated is formed.

The outside-pin support part 440 is fastened to the inside of the cylinder-shaped part 422. The outside-pin support part 440 includes multiple holders that hold the outside pins 234, which will be described later, at regular intervals on the circumference around the shaft center CL. Each of the holders holds the outside pin 234 via a bearing 234a, which will be described later, and the outside pin 234 is supported rotatably with respect to the deceleration-unit-side case 420.

### [Configuration of intermediate case 430]

The intermediate case 430 is substantially a disk-shaped member having an opening at the center portion, which is a perimeter of the shaft center CL, and a bearing 431 is fitted into the opening of the center portion. Moreover, the intermediate case 430 includes a concave part 432, which is recessed from an end surface on the side of the deceleration-unit-side case 420, around the shaft center CL, and a pump 260, which will be described later, is disposed in the concave part 432. Inside the intermediate case 430, there is formed an oil intake path 433 that allows the oil reservoir chamber 424 and the concave part 432 to be communicated and guides the oil stored in the oil reservoir chamber 424 to the concave part 432. Moreover, inside the intermediate case 430, there is formed an oil discharge path 434 that allows the concave part 432 and an upper portion of the inside of the cylinder-shaped part 422 in the deceleration-unit-side case 420 to be communicated with each other and discharges oil ejected from the pump 260 to the upper portion of the inside of the cylinder-shaped part 422.

In the case 400 configured as described above, the deceleration-unit-side case 420 is fastened to the intermediate case 430 by being clamped by a clamping member, such as a bolt. Moreover, the intermediate case 430 is fastened to the motor-unit-side case 410 by being clamped by a clamping member, such as a bolt.

Then, the drive device 10 is mounted to a vehicle body by attaching the motor-unit-side case 410 to the vehicle body.

### <<Configuration of motor unit 100>>

The motor unit 100 includes: a rotor 110 that rotates; a stator 120 that generates a rotational moment by interacting with the rotor 110; and a motor unit rotating shaft 130 that holds the rotor 110 and rotates with the rotor 110 around the shaft center CL.

### [Configuration of rotor 110]

The rotor 110 includes: multiple magnetic steel sheets 111 that are laminated and fastened to the motor unit rotating shaft 130; and multiple permanent magnets 112 fastened to outer circumferences of the magnetic steel sheets 111. The multiple magnetic steel sheets 111 and the multiple permanent magnets 112 are configured to have cylindrical shapes.

The rotor 110 is fastened to the motor unit rotating shaft 130.

### [Configuration of stator 120]

The stator 120 includes an iron core 121 formed by laminated magnetic steel sheets and a coil 122 wound around each teeth portion formed on the iron core 121. The iron core 121 is configured to have a cylindrical shape.

Wiring (not shown) for supplying electric power from an electric power supply is connected to the stator 120.

The stator 120 is fastened to the motor-unit-side case 410.

### [Configuration of motor unit rotating shaft 130]

The motor unit rotating shaft 130 is supported to be rotatable around the shaft center CL with respect to the case 400 via the bearing 413 attached to the motor-unit-side case 410 and the bearing 431 attached to the intermediate case 430. It can be shown as an example that the bearing 413 and the bearing 431 are ball bearings or roller bearings.

The motor unit rotating shaft 130 is molded to be hollow, and a spline for being coupled with a deceleration unit rotating shaft 210, which will be described later, is formed on an inner circumferential surface of an end portion thereof on the deceleration unit 200 side in the direction of the shaft center CL.

### <<Configuration of deceleration unit 200>>

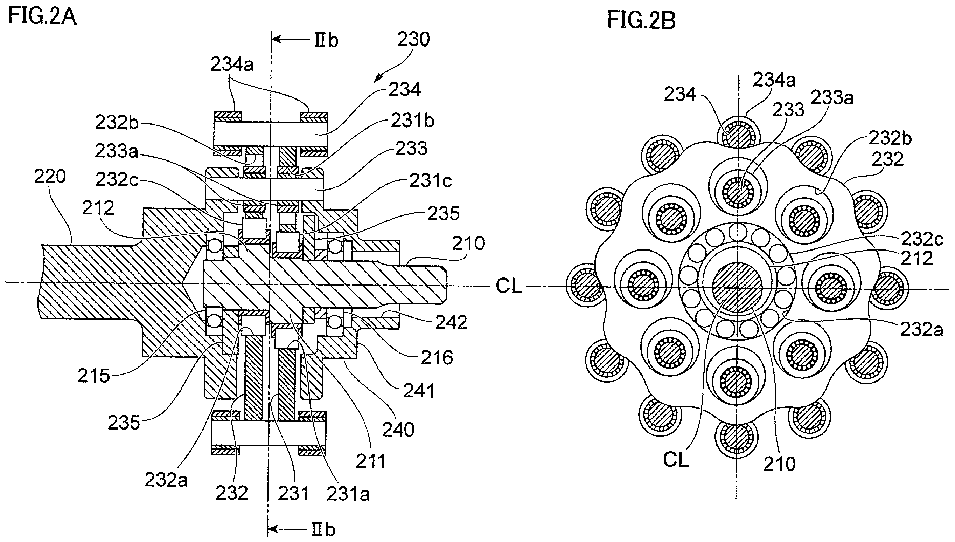

FIG. 2A is an enlarged view of a part of the deceleration unit 200. FIG. 2B is a cross-sectional view of a IIb-IIb part in FIG. 2A.

The deceleration unit 200 related to the exemplary embodiment is a well-known cycloidal deceleration mechanism.

The deceleration unit 200 includes: the deceleration unit rotating shaft 210 that is coupled with the motor unit rotating shaft 130 (refer to FIG. 1) and rotates around the shaft center CL together with the motor unit rotating shaft 130; and a transmission-unit-side rotating shaft 220 that transmits the output from the deceleration unit 200 to the transmission unit 300 by rotating around the shaft center CL. Moreover, the deceleration unit 200 includes: a motion conversion mechanism part 230 that decelerates a rotating motion of the deceleration unit rotating shaft 210 and transmits thereof to the transmission-unit-side rotating shaft 220; a stabilizer 240 that stabilizes rotation of the transmission-unit-side rotating shaft 220; and a lubrication device 250 (refer to FIG. 1) that supplies oil as an example of a lubricating oil to the deceleration unit 200.

### [Configuration of deceleration unit rotating shaft 210]

The deceleration unit rotating shaft 210 is coupled with the motor unit rotating shaft 130 via a spline formed on an outer circumferential surface of an end portion thereof on the motor unit 100 side in the direction of the shaft center CL. Moreover, the deceleration unit rotating shaft 210 is supported rotatably around the shaft center CL with an end portion thereof on the transmission unit 300 side in the direction of the shaft center CL via a bearing 215 disposed between thereof and the transmission-unit-side rotating shaft 220 and with a center portion thereof in the direction of the shaft center CL via a bearing 216 disposed between thereof and the stabilizer 240, which will be described later. It can be shown as an example that the bearings 215 and 216 are ball bearings or roller bearings.

Moreover, the deceleration unit rotating shaft 210 includes eccentric parts 211 and 212 that are disk-shaped portions around a position eccentric to the shaft center CL and are provided with 180-degree phase difference from each other.

### [Configuration of transmission-unit-side rotating shaft 220]

The transmission-unit-side rotating shaft 220 includes a shaft part 221 (refer to FIG. 1) in a columnar shape and a flange part 222 (refer to FIG. 1) in a disk shape provided on an end portion on the deceleration unit rotating shaft 210 side in the direction of the shaft center CL in the shaft part 221.

The transmission-unit-side rotating shaft 220 is supported rotatably with respect to the case 400 via a bearing 225 (refer to FIG. 1) disposed between thereof and the outside-pin support part 440.

On an outer circumferential surface of an end portion on the transmission unit 300 side in the direction of the shaft center CL in the shaft part 221, a spline and a male thread are formed.

On a circumference around the shaft center CL in the flange part 222, multiple holes for fastening inside pins 233, which will be described later, are formed at regular intervals.

### [Configuration of motion conversion mechanism part 230]

The motion conversion mechanism part 230 includes: a curved plate 231 in a plate shape rotatably held by the eccentric part 211 of the deceleration unit rotating shaft 210; and a curved plate 232 in a plate shape rotatably held by the eccentric part 212 of the deceleration unit rotating shaft 210. Moreover, the motion conversion mechanism part 230 includes columnar-shaped inside pins 233 that are supported by the multiple holes formed in the flange part 222 of the transmission-unit-side rotating shaft 220. Moreover, the motion conversion mechanism part 230 includes columnar-shaped outside pins 234 held by the outside-pin support part 440 via the bearings 234a, the outside-pin support part 440 being fastened to a predetermined position inside the case 400. Moreover, the motion conversion mechanism part 230 includes counterweights 235 for canceling unbalanced inertia couple caused by rotation of the curved plate 231 and the curved plate 232.

On an outer circumferential portion of the curved plate 231, multiple waveforms configured with trochoidal curves, such as epitrochoids, are formed. Moreover, in the curved plate 231, a center portion through hole 231a, which is a through hole in the direction of the shaft center CL, is formed in the center portion, and intermediate through holes 231b, which are through holes in the direction of the shaft center CL, are formed between the center portion and the outer circumferential portion. The multiple intermediate through holes 231b are formed at regular intervals on a circumference around the center of the eccentric part 211 of the deceleration unit rotating shaft 210.

Into the center portion through hole 231 a, the eccentric part 211 of the deceleration unit rotating shaft 210 is fitted via a bearing 231c. Into the intermediate through holes 231b, the inside pins 233 are inserted via bearings 233a. The inner diameter of the intermediate through hole 231 b is set larger by a predetermined amount than the outer diameter of the bearing 233a.

In the curved plate 232, similar to the curved plate 231, multiple waveforms configured with trochoidal curves are formed on an outer circumferential portion thereof, a center portion through hole 232a, which is a through hole in the direction of the shaft center CL, is formed in the center portion, and intermediate through holes 232b, which are through holes in the direction of the shaft center CL, are formed between the center portion and the outer circumferential portion. The multiple intermediate through holes 232b are formed at regular intervals on a circumference around the center of the eccentric part 212 of the deceleration unit rotating shaft 210. Into the center portion through hole 232a, the eccentric part 212 of the deceleration unit rotating shaft 210 is fitted via a bearing 232c. Into the intermediate through holes 232b, the inside pins 233 are inserted via bearings 233a.

The inside pins 233 are fastened to the flange part 222 of the transmission-unit-side rotating shaft 220. The multiple inside pins 233 are disposed at regular intervals on the circumference around the shaft center CL. The bearings 233a are fitted into positions that are in contact with the intermediate through holes 231b and 232b of the curved plate 231 and the curved plate 232 in the direction of the shaft center CL in the inside pin 233. It is possible to show as an example that the bearing 233a is a needle roller bearing.

The outside pins 234 are rotatably supported by the outside-pin support part 440 via the bearings 234a, the outside-pin support part 440 being fastened to the deceleration-unit-side case 420. It is possible to show as an example that the bearing 234a is a needle roller bearing. The multiple outside pins 234 are disposed at regular intervals on the circumference around the shaft center CL. When the curved plate 231 and the curved plate 232 are in orbital motion, the outside pins 234 engage with the multiple waveforms configured with the trochoidal curves formed on the outer circumferential portion, to thereby cause the curved plate 231 and the curved plate 232 to perform rotational motion.

The counterweights 235 are disposed at positions adjacent to the respective eccentric parts 211 and 212 of the deceleration unit rotating shaft 210 with 180-degree phase differences from the respective eccentric parts 211 and 212. In the counterweight 235, a through hole that is in a circular plate shape and fitted over the deceleration unit rotating shaft 210 is formed at an eccentric position from the shaft center CL, and thereby, the counterweight 235 is fastened to the deceleration unit rotating shaft 210 via the through hole.

### [Configuration of stabilizer 240]

The stabilizer 240 includes: an annular part 241 in an annular shape having an opening at a center portion thereof; and a cylinder part 242 that protrudes cylindrically in the direction of the shaft center CL from an end portion of the inner diameter side in the annular part 241.

The stabilizer 240 is supported rotatably with respect to the case 400 via a bearing 245 disposed between thereof and the outside-pin support part 440.

In the annular part 241, multiple through holes penetrating in the direction of the shaft center CL are formed at regular intervals on the circumference around the shaft center CL. The end portions of the inside pins 233 in the direction of the shaft center CL are fitted into the through holes. When the curved plate 231 and the curved plate 232 are in the orbital motion, a load applied to part of the inside pins 233 from the curved plate 231 and the curved plate 232 is supported by all the inside pins 233 via the stabilizer 240. This reduces stress acting on the inside pins 233 and improves durability of the inside pins 233.

### [Configuration of lubrication device 250]

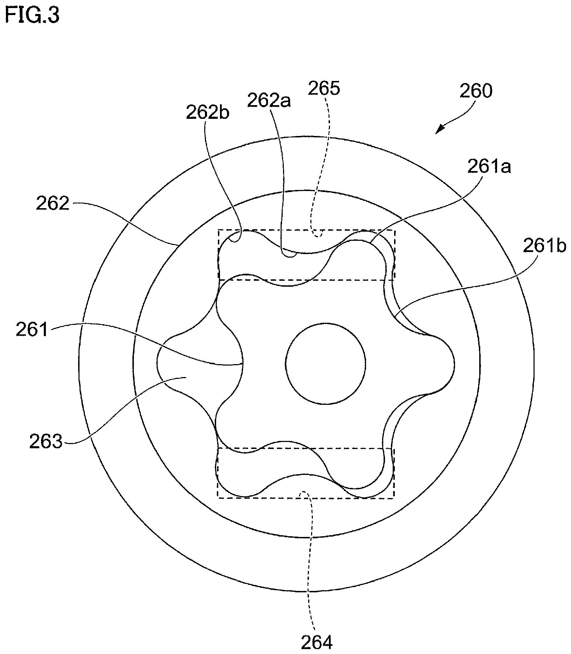

FIG. 3 is a diagram in which the pump 260 is viewed in the direction of the shaft center CL.

The lubrication device 250 includes the pump 260 that pumps up and conveys the oil stored in the oil reservoir chamber 424 (refer to FIG. 1).

The pump 260 includes: an inner rotor 261 that rotates by using the rotation of the transmission-unit-side rotating shaft 220; an outer rotor 262 that rotates to follow the rotation of the inner rotor 261; a pump chamber 263; an intake port 264 communicated with the oil reservoir chamber 424; and an ejection port 265 that ejects the oil.

The inner rotor 261 has, on the outer circumferential surface thereof, a tooth profile configured with a cycloid curve including convex parts 261a in a shape of an epicycloid curve and concave parts 261b in a shape of a hypocycloid curve. The inner rotor 261 is fitted into the outer circumferential surface of the annular part 241 (refer to FIG. 2) in the stabilizer 240, and rotates with the stabilizer 240.

The outer rotor 262 has, on the inner circumferential surface thereof, a tooth profile configured with a cycloid curve including convex parts 262a in a shape of a hypocycloid curve and concave parts 262b in a shape of an epicycloid curve. The outer rotor 262 is rotatably supported by the intermediate case 430. The outer rotor 262 rotates around a rotation center different from a rotation center of the inner rotor 261. Moreover, the number of teeth of the outer rotor 262 is, assuming that the number of teeth of the inner rotor 261 is n, set to n+1. In the example shown in FIG. 3, n = 5.

The pump chamber 263 is a space between the inner rotor 261 and the outer rotor 262, and there are formed the multiple pump chambers 263. When the inner rotor 261 rotates by using the rotation of the transmission-unit-side rotating shaft 220, the outer rotor 262 rotates to follow thereof. At this time, since the inner rotor 261 and the outer rotor 262 rotate around respective rotation centers different from each other, the volume of the pump chambers 263 continuously changes.

The intake port 264 is communicated with the oil reservoir chamber 424 via the oil intake path 433 formed in the deceleration-unit-side case 420 and the intermediate case 430.

The ejection port 265 is communicated with a space inside the case 400 containing the motion conversion mechanism part 230 via the oil discharge path 434 formed in the intermediate case 430.

In the lubrication device 250 configured as described above, the oil in the oil reservoir chamber 424 flows from the intake port 264 into the pump chambers 263, in which the volume changes continuously by the rotation of the inner rotor 261 and the outer rotor 262, and is ejected from the ejection port 265. In this manner, the oil is supplied to the motion conversion mechanism part 230 contained inside the case 400 and circulates inside the case 400.

### <<Configuration of transmission unit 300>>

The transmission unit 300 includes: a wheel hub 310 that is fastened to and coupled with the transmission-unit-side rotating shaft 220; a wheel hub bearing 320 that rotatably supports the wheel hub 310 with respect to the case 400; and a bearing holder part 330 that holds the wheel hub bearing 320.

The wheel hub 310 includes: an annular part 311 in an annular shape having an opening at a center portion thereof; and a cylinder part 312 that protrudes cylindrically in the direction of the shaft center CL from an end portion of the inner diameter side in the annular part 311.

In the annular part 311, multiple through holes penetrating in the direction of the shaft center CL are formed at regular intervals on the circumference around the shaft center CL. To the through holes, bolts 313 are fastened. Through the bolts 313, the wheel 3 is fastened to and coupled with the wheel hub 310.

On an inner circumferential surface of the cylinder part 312, a spline is formed. The wheel hub 310 and the transmission-unit-side rotating shaft 220 are coupled with each other by engagement of the spline formed in the cylinder part 312 and the spline formed in the shaft part 221 of the transmission-unit-side rotating shaft 220 and tight fastening of a tip end portion of the transmission-unit-side rotating shaft 220 by a nut 314. This transmits the rotation of the transmission-unit-side rotating shaft 220 to the wheel hub 310.

The wheel hub bearing 320 includes: an inner ring 321 fitted over the outer circumferential surface of the wheel hub 310; an outer ring 322 fitted into the inner circumferential surface of the bearing holder part 330; multiple balls 323 disposed between the inner ring 321 and the outer ring 322; and shields 324 disposed at both end portions thereof in the direction of the shaft center CL.

The bearing holder part 330 includes: an annular part 331 in an annular shape having an opening at a center portion thereof; and a cylinder part 332 that protrudes cylindrically in the direction of the shaft center CL from an end portion of the inner diameter side in the annular part 331.

In the annular part 331, multiple through holes penetrating in the direction of the shaft center CL are formed at regular intervals. The bearing holder part 330 is tightly fastened to the deceleration-unit-side case 420 via bolts 333 inserted into the through holes.

Into the inner circumferential surface of the cylinder part 332, the outer ring 322 of the wheel hub bearing 320 is fitted.

Moreover, between the inner circumferential surface of the cylinder part 332 and the outer circumferential surface of the transmission-unit-side rotating shaft 220, an oil seal 334 that seals the inside of the case 400 is attached.

An inside space S of the case 400 in the drive device 10 configured as described above is sealed by the oil seal 334. This prevents a liquid, such as water, or a solid, such as dust, from entering the inside of the case 400 (inside space S) from the outside of the case 400. Moreover, leakage of oil from the inside of the case 400 (inside space S) to the outside of the case 400 through the gap between the deceleration unit 200 and the transmission unit 300 can be suppressed.

In the drive device 10 related to the exemplary embodiment, pressure adjustment inside the case 400 (inside space S) is performed via the ventilation member 500. Hereinafter, the ventilation member 500 will be described in detail.

### <<Configuration of ventilation member 500>>

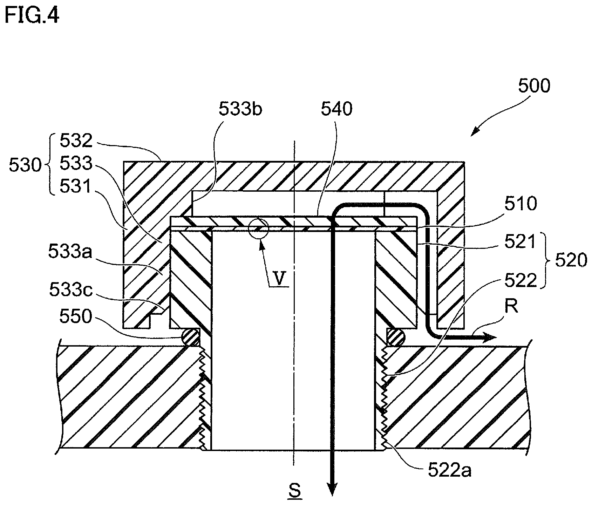

FIG. 4 is a cross-sectional view of the ventilation member 500. Note that FIG. 4 shows the ventilation member 500 shown in FIG. 1 in a state being rotated 45 degrees in the clockwise direction.

The ventilation member 500 includes a ventilation membrane 510, as an example of a ventilation body, that captures oil moving from the inside of the case 400 toward the outside of the case 400 and also has multiple holes formed therein to permit flow of a gas between the inside of the case 400 and the outside of the case 400.

Moreover, the ventilation member 500 includes: a support member 520, as an example of an attachment part, that supports the ventilation membrane 510; and a covering member 530 that covers around the ventilation membrane 510 to form a ventilation path R for allowing a gas to flow between thereof and the ventilation membrane 510.

Moreover, the ventilation member 500 includes: a protection member 540 that is disposed outside of the ventilation membrane 510 and prevents solids, which move from the outside of the case 400 toward the inside of the case 400, from reaching the ventilation membrane 510; and an O ring 550 that seals between the support member 520 and the case 400.

### [Ventilation membrane 510]

The ventilation membrane 510 is formed in a disk shape. Then, in the state where the ventilation member 500 is attached to the case 400, one flat surface of the ventilation membrane 510 faces the inside of the case 400 (inside space S) and the other flat surface faces the outside of the case 400.

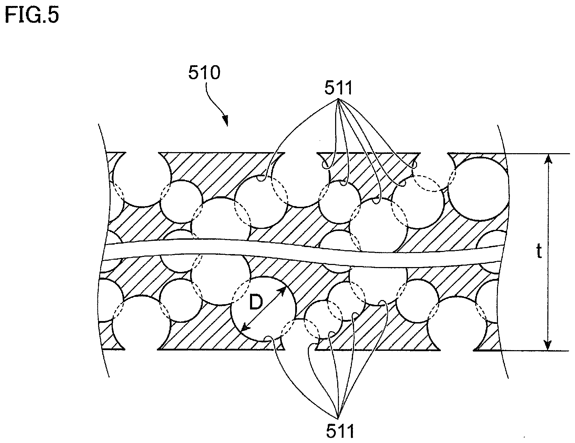

FIG. 5 is an enlarged view of a V part in FIG. 4.

The ventilation membrane 510 related to the exemplary embodiment is a porous body in which multiple pores 511 are continuously disposed three-dimensionally. More specifically, the ventilation membrane 510 is a porous body having an open-cell structure in which multiple pores 511 are communicated with one another. The state in which the multiple pores 511 are communicated with one another refers to a state in which a gas can flow between adjacent pores 511. To put it another way, it is the state in which the adjacent pores 511 form a continuous space. In FIG. 5, a mode in which the multiple pores 511 are continuously disposed two-dimensionally is shown; however, also in the direction orthogonal to the page, the multiple pores 511 are continuously disposed as shown in FIG. 5.

Note that, in the ventilation membrane 510 of the exemplary embodiment, of the multiple pores 511, it is sufficient that at least a part thereof can be communicated with each other. To put it another way, not all the pores 511 are needed to be communicated. Moreover, multiple pores 511 may be communicated with a single pore 511.

The shape of the pore 511 is not particularly limited as long as the shape is regarded to be substantially grainy, such as a spherical shape, an elliptic body, a spindle body, a polygonal body and the like.

As a material of the ventilation membrane 510, for example, a thermoplastic resin, such as, polybutylene terephthalate (PBT), polybutylene naphthalate, polyethylene, polystyrene, acrylonitrile-styrene copolymer resin (AS resin), acrylonitrile-butadiene-styrene copolymer resin (ABS resin), polypropylene, polycarbonate and polyacetal, can be shown.

Of these, in terms of strength or heat resistance, PBT is used for the ventilation membrane 510 related to the exemplary embodiment.

Moreover, it can be shown as an example that the thickness t of the ventilation membrane 510 (refer to FIG. 5) is 1 mm or more. By setting the thickness t of the ventilation membrane 510 to 1 mm or more, it becomes possible to secure sufficiently long open-cell structure in which the multiple pores 511 are continuously disposed three-dimensionally.

Moreover, it can be shown as an example that the thickness t of the ventilation membrane 510 is 10 mm or less. When the thickness t of the ventilation membrane 510 is thicker than 10 mm, since the distance from the inside of the case 400 to the outside of the case 400 becomes long, it takes a long time to discharge a gas.

Moreover, it is preferable that the pore diameter D of the pore 511 formed in the ventilation membrane 510 (refer to FIG. 5) is in the range of 0.1 µm or more to 100 µm or less. When the pore diameter D is less than 0.1 µm, effect of promoting circulation of a gas is insufficient in some cases, whereas, when the pore diameter D is 100 µm or more, there is a possibility of reducing the strength of the ventilation membrane 510. The pore diameter D of a pore 511 may be the same as or different from the pore diameter D of another pore 511.

It is preferable to apply liquid repellent treatment, such as water repellent treatment or oil repellent treatment to the surface of the ventilation membrane 510, at least, to a portion on the outside. By applying the liquid repellent treatment to the ventilation membrane 510, adhesion of contamination or the like to the ventilation membrane 510 is suppressed. As a result, clogging of the ventilation membrane 510 is suppressed.

The liquid repellent treatment for the ventilation membrane 510 can be performed by coating the surface of the ventilation membrane 510 with a liquid repellent agent, which has, for example, a compound including a hydrocarbon group saturated with fluoride (perfluoro-alkyl group) in a side chain and has a main chain of acrylic series, methacrylic series, silicone series or the like as a component. The method of coating the surface of the ventilation membrane 510 is not particularly limited; however, for example, gravure coating, spray coating, kiss coating, dipping or the like can be adopted.

The ventilation membrane 510 configured as described above captures oil moving from the inside of the case 400 toward the outside of the case 400 and also permits flow of a gas between the inside of the case 400 and the outside of the case 400. To capture oil means to absorb the oil into the inside of the multiple pores formed in the ventilation membrane 510, to thereby prevent the oil from passing through the ventilation membrane 510.

Moreover, the ventilation membrane 510 returns the captured oil to the inside of the case 400 by causing the oil to fall down a communicating hole, in which multiple pores 511 are communicated, by self weight. For example, the oils in the pores 511 formed in the ventilation membrane 510 jostle with one another, and move downward by the self weight to go out of the ventilation membrane 510 through the pores 511. Consequently, the oil once absorbed inside the ventilation membrane 510 is returned to the inside of the case 400 again.

### [Support member 520]

The support member 520 has, as shown in FIG. 4, a shape in which two cylinder-shaped portions having the same inner diameters and different outer diameters are disposed in the centerline direction of the cylinder, and includes a first cylinder-shaped part 521 with a larger outer diameter and a second cylinder-shaped part 522 with a smaller outer diameter.

The support member 520 is attached to the case 400 while supporting the ventilation membrane 510, and the inside thereof functions as a part of the ventilation path R.

The ventilation membrane 510 is supported by an end surface on one side (on a side where the second cylinder-shaped part 522 is not disposed) in the centerline direction of the cylinder in the first cylinder-shaped part 521. The ventilation membrane 510 is disposed to close the opening portion of the support member 520. As the method of causing the ventilation membrane 510 to be supported by the first cylinder-shaped part 521, thermal welding or adhesion by a bonding agent can be shown as an example.

A groove 522a in a spiral shape is formed on an outer circumferential surface of an end portion on the other side (on a side where the first cylinder-shaped part 521 is not disposed) in the centerline direction of the cylinder in the second cylinder-shaped part 522. By screwing the groove 522a formed on the second cylinder-shaped part 522 into the female thread 426 formed on the deceleration-unit-side case 420, the ventilation member 500 is fastened to the case 400.

The O ring 550 is attached to the outer circumferential surface of an end portion on one side (on a side where the first cylinder-shaped part 521 is disposed) in the centerline direction of the cylinder in the second cylinder-shaped part 522. The O ring 550 seals the gap between the support member 520 and the case 400 by being pressed by an end surface on the other side in the centerline direction of the cylinder in the first cylinder-shaped part 521 and an outside portion in the case 400 and brought into contact with the outer circumferential surface of the second cylinder-shaped part 522, the end surface on the other side in the centerline direction of the cylinder in the first cylinder-shaped part 521 and the outside portion in the case 400.

It can be shown as an example that the material of the support member 520 is a thermoplastic resin that is easily molded. For example, it can be shown that the material includes polybutylene terephthalate (PBT), polyphenylene sulfide (PPS), polysulfone (PS), polypropylene (PP), polyethylene (PE), ABS resin, thermoplastic elastomer or a composite material thereof. Moreover, as the material of the support member 520, other than the above-described thermoplastic resins, a composite material made by combining a reinforcement, such as glass fiber or carbon fiber, or metal with the thermoplastic resin to improve heat resistance, dimensional stability, rigidity or the like may be used.

The molding method of the support member 520 is not particularly limited; for example, molding by injection molding or cutting can be provided.

### [Covering member 530]

The covering member 530 includes: a side wall part 531 substantially in a cylindrical shape; a top part 532 substantially in a disk shape that covers one of opening portions in the side wall part 531; and protrusions 533 that protrude in a plate-like shape inwardly from the inner circumferential surfaces of the side wall part 531 and the top part 532.

The protrusion 533 includes: a radial direction protrusion 533a that protrudes from the inner circumferential surface of the side wall part 531 toward (the inside of) the centerline of the cylinder; and a centerline direction protrusion 533b that protrudes from the inner circumferential surface of the top part 532 toward the centerline direction. The protrusions 533 are disposed at multiple locations (in the exemplary embodiment, 6 locations) in the circumferential direction at regular angle intervals.

The covering member 530 is held by the support member 520 by contact of inside end surfaces in the radial direction of the radial direction protrusions 533a of the multiple protrusions 533 with the outer circumferential surface of the second cylinder-shaped part 522 of the support member 520. In other words, molding is carried out so that the diameter of a circle formed by connecting the inside end surfaces in the radial direction of the radial direction protrusions 533a of the multiple protrusions 533 becomes smaller than the diameter of the outer circumferential surface of the second cylinder-shaped part 522 of the support member 520, and thereby the radial direction protrusions 533a of the multiple protrusions 533 catch the outer circumferential surface of the second cylinder-shaped part 522 of the support member 520.

The covering member 530 is fitted over the support member 520 by being pressed toward the centerline direction from the opening portion side of the side wall part 531. Note that, to make it easy to fit the covering member 530 over the support member 520, a tapered part 533c is formed on the end portion on the opening portion side of the side wall part 531 in the radial direction protrusion 533a and inside in the radial direction.

The covering member 530 is pressed toward the centerline direction until the end surfaces in the centerline direction of the centerline direction protrusions 533b of the multiple protrusions 533 contact the protection member 540. The protection member 540 is held inside the covering member 530 by being sandwiched between the covering member 530 and the ventilation membrane 510.

Then, in the state being held by the support member 520, the covering member 530 covers around the ventilation membrane 510 and the protection member 540, and also partially covers around the first cylinder-shaped part 521 of the support member 520.

The material of the covering member 530 is hard thermoplastic resin without rubber elasticity, such as polypropylene, polyethylene, polyethylene terephthalate, or ABS, for example. Moreover, the material of the covering member 530 may be thermoplastic elastomer having rubber elasticity.

Moreover, the covering member 530 is molded by injection molding, for example.

### [Protection member 540]

The protection member 540 is, as shown in FIG. 4, laminated on the outer (opposite to the inside space S) surface of the ventilation membrane 510. The material, structure and shape of the protection member 540 are not particularly limited as long as solids moving from the outside of the case 400 toward the inside of the case 400 are prevented from reaching the ventilation membrane 510; however, it is desirable that the protection member 540 has the pore diameter larger than that of the ventilation membrane 510 and is excellent in ventilating property. Then, an example can be shown in which the protection member 540 is cloth, resin or metal in a mesh shape or a fiber shape. For example, the protection member 540 may be a woven cloth, a non-woven cloth, a resin mesh, a net, a sponge, a metal porous body or a metal mesh. When heat resistance is required, it is preferable that the material of the protection member 540 is cloth, polyester, polyamide, aramid resin, polyimide, fluoride resin, ultrahigh molecular weight polyethylene, metal or the like.

The protection member 540 related to the exemplary embodiment is laminated on one surface of the ventilation membrane 510; however, the protection member 540 may be laminated on both surfaces of the ventilation membrane 510. Moreover, the protection member 540 may be joined or may not be joined to the ventilation membrane 510. When the protection member 540 is not joined to the ventilation membrane 510, the protection member 540 may be held inside the covering member 530 by being sandwiched between the covering member 530 and the ventilation membrane 510 or the support member 520.

### [Action and effect of ventilation member 500]

In the drive device 10 configured as described above, when heat is generated by friction caused by the action of the deceleration unit 200, energization of the coil 122 from the stator 120, or the like, air inside the case 400 (inside space S) expands. When the pressure inside the case 400 becomes higher relative to the pressure outside the case 400 by the expanded air, the air inside the case 400 is discharged to the outside of the case 400 through the ventilation member 500. Consequently, discharge of air from a lip portion of the oil seal 334, or others, is suppressed.

Moreover, when the air inside the case 400 is discharged to the outside of the case 400, the ventilation membrane 510 of the ventilation member 500 captures the oil moving from the inside of the case 400 toward the outside of the case 400. Therefore, the ventilation member 500 prevents the oil, with which the inside of the case 400 is filled, from leaking to the outside of the case 400. Moreover, since the oil captured by the ventilation membrane 510 returns to the inside of the case 400 by self weight, occurrence of clogging in the ventilation membrane 510 by oil is suppressed.

On the other hand, when action of the deceleration unit 200 or energization of the coil 122 from the stator 120 is stopped and thereby action of the drive device 10 is stopped, the air inside the case 400 contracts. Then the pressure inside the case 400 becomes negative pressure relative to the pressure outside the case 400 and the air outside the case 400 is sucked into the inside of the case 400 through the ventilation member 500.

When the air outside the case 400 is introduced to the inside of the case 400, the ventilation membrane 510 of the ventilation member 500 prevents liquids and solids from entering the inside of the case 400 from the outside of the case 400. Therefore, the ventilation member 500 prevents water, dust or others from entering the inside of the case 400.

Then, by screwing the groove 522a formed on the second cylinder-shaped part 522 of the support member 520 that supports the ventilation membrane 510 into the female thread 426 formed on the deceleration-unit-side case 420 of the case 400, the ventilation member 500 is fastened to the case 400. Therefore, the drive device 10 related to the exemplary embodiment is able to realize moderation of pressure fluctuations based on changes in temperature inside the case 400, prevention of entry of liquids and solids to the inside of the case 400, and leakage of the oil inside the case 400 to the outside of the case 400, with the simple configuration.

Moreover, since the ventilation member 500 related to the exemplary embodiment includes the protection member 540 outside the ventilation membrane 510, solids moving from the outside of the case 400 toward the inside of the case 400 are prevented from reaching the ventilation membrane 510. Therefore, the ventilation membrane 510 is prevented from being damaged by, for example, brake dust generated from a brake rotor rotating together with the wheel hub 310. Moreover, since the ventilation member 500 includes the covering member 530 around the ventilation membrane 510 and the protection member 540, the liquids and the solids hardly reach the ventilation membrane 510. As a result, the ventilation member 500 related to the exemplary embodiment is able to fulfill a function of preventing liquids and solids from entering the inside of the case 400 and preventing oil inside the case 400 from leaking to the outside of the case 400 over a long time.

Moreover, the ventilation member 500 related to the exemplary embodiment is attached to a location higher than the shaft center CL in the deceleration-unit-side case 420. In other words, the ventilation member 500 is farther away from the road surface than that in the case where the ventilation member 500 is attached to a location lower than the shaft center CL. Therefore, if there is muddy water on the road surface, the muddy water hardly reaches the ventilation member 500. Therefore, the ventilation member 500 related to the exemplary embodiment is able to fulfill a function of preventing liquids and solids from entering the inside of the case 400 and preventing oil inside the case 400 from leaking to the outside of the case 400 over a long time.

Moreover, since the ventilation member 500 related to the exemplary embodiment is attached to the connection part 423 that is inclined at substantially 45 degrees to the shaft center CL, the surface of the ventilation membrane 510 is also inclined at substantially 45 degrees to the shaft center CL and is orthogonal to the page of FIG. 1. Therefore, the ventilation membrane 510 is able to return the captured oil to the inside of the case 400 by self weight of the oil. Moreover, even if a liquid, such as muddy water, or a solid, such as dust, is placed on the outer surface of the ventilation membrane 510, it is possible to let thereof fall downward by self weight.

### <Modified example of ventilation member 500>

In the above-described exemplary embodiment, screwing the ventilation member 500 into the female thread 426 formed in the case 400 is shown as an example of the method of attaching the ventilation member 500 to the case 400; however, the method is not particularly limited thereto. For example, the ventilation member 500 may be attached to the case 400 by press fitting the support member 520 of the ventilation member 500 into the through hole 425 penetrating the inside of the case 400 (inside space S) and the outside of the case 400.

Moreover, without the support of the ventilation membrane 510 by the support member 520, the ventilation membrane 510 may be applied, by bonding or the like, to the case 400 to close the through hole 425 formed in the case 400.

In the above-described exemplary embodiment, as an example of the ventilation body that captures oil moving from the inside of the case 400 toward the outside of the case 400 and also has multiple holes formed therein to permit flow of a gas between the inside of the case 400 and the outside of the case 400, the ventilation membrane 510 is shown; however, not particularly limited to the ventilation membrane 510. The shape of the ventilation body is not limited to the disk shape as long as the multiple pores 511 are the porous body continuously disposed three-dimensionally, and are a molded item that captures oil by the multiple pores 511 and causes the captured oil to be discharged to the inside of the case 400 by the self weight, and can be appropriately selected in accordance with the shape of the case 400 or others to which the ventilation member 500 is attached. For example, the shape of the ventilation body may be a polygonal columnar shape, such as a quadrangular prism, spherical shape or the like. Moreover, the shape of the support member 520 that supports the ventilation body is also not limited to the above-described cylindrical shape, and is able to be appropriately selected in accordance with the shape of the ventilation member 500 or the shape of the case 400. Further, the ventilation body may be directly attached to the opening of the case 400, not via the support member 520 or the like.

Moreover, in the above-described exemplary embodiment, the drive device 10 includes a single ventilation member 500; however, the number thereof is not limited to one, and multiple ventilation members 500 may be provided. By the provision of the multiple ventilation members 500, even when one of the ventilation members 500 is damaged or clogged, since other ventilation members 500 fulfill the above-described function, the drive device 10 is capable of preventing liquids and solids from entering the inside of the case 400 and preventing oil inside the case 400 from leaking to the outside of the case 400 over a longer time.

Moreover, the ventilation membrane 510 may be a porous body having a two-layer structure in the thickness direction. For example, it can be shown that a layer inside the case 400 is, as the ventilation membrane 510 described above, a porous body in which multiple pores are continuously disposed three-dimensionally, and a layer outside the case 400 is a porous body in which multiple pores that prevent liquids and solids from passing through and permit gases to pass through are formed. As the layer outside of the case 400, a polytetrafluoroethylene (PTFE) porous film can be shown. These layers inside the case 400 and outside the case 400 may be molded in one piece, or molded as separate pieces.

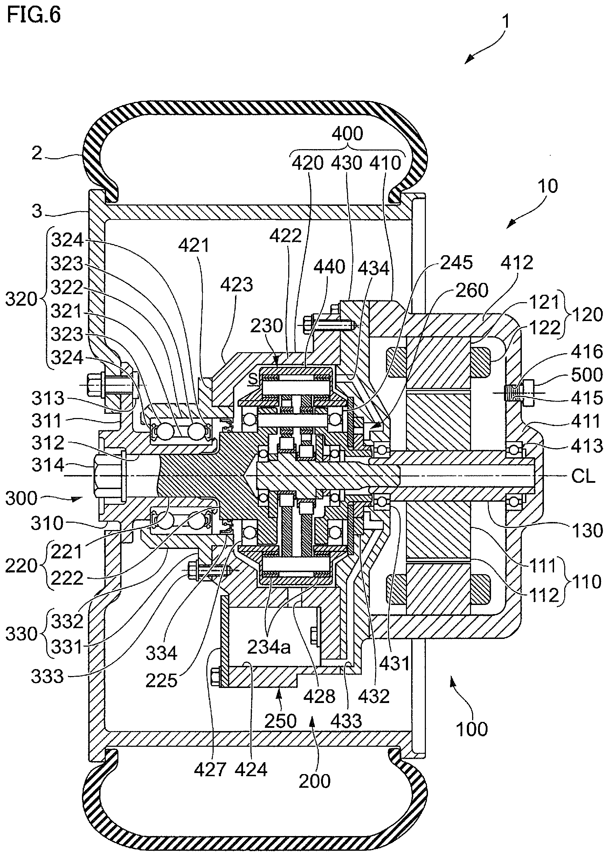

FIG. 6 is a diagram showing a modified example of another mounting position of the ventilation member 500.

In the above-described exemplary embodiment, the ventilation member 500 is attached to, of the motor-unit-side case 410, the deceleration-unit-side case 420 and the intermediate case 430 included in the case 400, the deceleration-unit-side case 420; however, the ventilation member 500 may be attached to the motor-unit-side case 410 or the intermediate case 430.

In FIG. 6, a mode in which the ventilation member 500 is attached to the motor-unit-side case 410 is shown. In wheel drive device 1 shown in FIG. 6, a through hole 415 that allows the inside and the outside of the motor-unit-side case 410 to be communicated is formed at a portion upper than the shaft center CL in the disk-shaped part 411 of the motor-unit-side case 410, and a female thread 416 is formed on the inner circumferential surface of the through hole 415. Then, the ventilation member 500 is attached to the motor-unit-side case 410 by being tightly screwed by the female thread 416.

Moreover, in the above-described exemplary embodiment, a cycloidal deceleration mechanism is shown as the deceleration unit 200 for example; however, the deceleration unit 200 is not particularly limited to such a mechanism, and arbitrary deceleration mechanism can be adopted. For example, the deceleration unit 200 may be a planetary gear deceleration mechanism or a parallel axes gear deceleration mechanism.

Moreover, in the above-described exemplary embodiment, the ventilation member 500 is attached to the case 400 that contains the rotor 110 generating heat by energization to the deceleration unit 200 or the coil 122 or the stator 120, as an example of a heat generation body; however, the ventilation member 500 is able to fulfill the above-described function by being attached to a case containing the other heat generation body.

It can be shown as an example that the other heat generation body is a parts group configured with gears or shafts to constitute a transmission that transmits power of a power source to a live axle while changing a torque, rotary speed or rotation direction. By being attached to a transmission case that contains the parts group, the ventilation member 500 is able to moderate pressure fluctuations inside the transmission case based on changes in temperature due to friction by the action of the parts group, and prevent entry of liquids and solids to the inside of the case and leakage of oil inside the case to the outside.

In such a case, the transmission is an example of a drive device including: a drive mechanism (parts group) that, as a result of having oil interposed therein, operates smoothly and generates heat by operating; a transmission case that contains the drive mechanism; and a ventilation membrane 510 that is attached to the transmission case and captures oil moving from inside the transmission case towards outside of the transmission case and also has multiple pores formed therein that permit gases to flow between the inside and the outside of the transmission case.

### Reference Signs List

- 1: Wheel drive device
- 2: Tire
- 3: Wheel
- 10: In-wheel motor drive device
- 100: Motor unit
- 200: Deceleration unit
- 300: Transmission unit
- 400: Case
- 500: Ventilation member
- 510: Ventilation membrane
- 520: Support member
- 530: Covering member
- 540: Protection member

## Claims

1. A drive device comprising:
a motor;
a deceleration unit that smoothly operates due to interposition of oil and decelerates rotary speed of the motor;
a case that contains the deceleration unit; and
a ventilation body that is attached to the case, captures the oil moving from inside the case toward outside of the case and includes a plurality of pores formed therein for permitting flow of a gas between the inside and the outside.

2. The drive device according to claim 1, wherein the ventilation body is a porous body in which the plurality of pores are continuously disposed three-dimensionally.

3. The drive device according to claim 1, wherein the ventilation body discharges the captured oil to the inside of the case by self weight of the oil through a communicating hole in which the plurality of pores are communicated.

4. The drive device according to claim 1, wherein oil repellent treatment is applied to at least a portion on the outside of the ventilation body.

5. A drive device comprising:
a drive mechanism that smoothly operates due to interposition of oil and generates heat by operating;
a case that contains the drive mechanism; and
a ventilation body that is attached to the case, captures the oil moving from inside the case toward outside of the case and includes a plurality of pores formed therein for permitting flow of a gas between the inside and the outside.

6. A ventilation member comprising:
a ventilation body that captures oil moving from inside a case toward outside of the case and includes a plurality of pores formed therein for permitting flow of a gas between the inside and the outside, the case containing a drive mechanism that smoothly operates due to interposition of the oil and generates heat by operating; and
an attachment part that attaches the ventilation body to the case.

7. The ventilation member according to claim 6, wherein the ventilation body is a porous body in which the plurality of pores are continuously disposed three-dimensionally.

8. The ventilation member according to claim 6, wherein the ventilation body discharges the captured oil to the inside of the case by self weight of the oil through a communicating hole in which the plurality of pores are communicated.

9. The ventilation member according to claim 6, wherein oil repellent treatment is applied to at least a portion on the outside of the ventilation body.
